(19) Europäisches Patentamt / European Patent Office / Office européen des brevets

(11) **EP 2 348 777 A1**

(12) **EUROPEAN PATENT APPLICATION**
published in accordance with Art. 153(4) EPC

(43) Date of publication:
27.07.2011 Bulletin 2011/30

(51) Int Cl.:
*H04W 52/04* (2009.01)   *H04B 7/005* (2006.01)

(21) Application number: 08877358.5

(22) Date of filing: 15.10.2008

(86) International application number:
PCT/CN2008/072702

(87) International publication number:
WO 2010/043081 (22.04.2010 Gazette 2010/16)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: ZTE Corporation
Shenzhen, Guangdong 518057 (CN)

(72) Inventors:
• PEI, Huimin
Shenzhen
Guangdong 518057 (CN)

• BAI, Wei
Shenzhen
Guangdong 518057 (CN)

(74) Representative: Price, Nigel John King et al
J.A. Kemp & Co.
14 South Square
Gray's Inn
GB-London WC1R 5JJ (GB)

(54) **METHOD FOR ADJUSTING BROADCAST AND MULTICAST FORWARD CHANNEL RESOURCE**

(57)   A method for adjusting forward channel resources, applied in a broadcast and multicast communication system, comprises: a terminal in a broadcast and multicast group sending a forward channel resource adjustment request to a base station when the base station is required to adjust forward channel resources; and the base station adjusting the forward channel resources after receiving the forward channel resource adjustment request. Furthermore, the terminal calculates a random number $P$ when the base station is required to adjust the forward channel resources; the terminal sends the forward channel resource adjustment request to the base station only when $P$ is within a sendable request value interval. Using the method for adjusting broadcast and multicast forward channel resources of the present invention, the number of terminals which send the forward channel resource adjustment request simultaneously can be controlled efficiently, thereby avoiding serious reverse interference. In addition, the present invention, through adaptive adjustment of a sending threshold $W_i$ by the terminals, allows the number of the terminals, which send the forward channel resource adjustment request simultaneously, in a group with more users to be controlled within a safe range.

FIG. 1

**Description**

Technical Field

The present invention relates to the field of communication, and particularly, to a method for adjusting broadcast and multicast forward channel resources.

Technical Background

In a code division multiple access (CDMA) evolution data only (EVDO) communication system, a time division method is used forwardly to serve different users. In cell boundaries or some special area where signal intensity is weaker and the rate is low, providing a communication channel of data, such as voice and video, for these users needs to use a lower rate, thus more forward time slots (channel resources) are occupied; on the contrary, users in good wireless communication environments may use a higher rate such that less forward time slots (channel resources) are occupied.

In order to utilize better the forward time slots, appropriate channel resources are generally required to be allocated according to the number and distribution situation of terminals to select an appropriate rate. However, in real application scenarios of broadcast and multicast communication services, distribution positions and the number of users (terminals) in a group that receive multicast and broadcast content can not be determined. Therefore, the distribution positions and the number of the users (terminals) are generally not considered in the prior art, whereas a fixed rate able to cover users in the cell boundaries is set. For example, the broadcast and multicast service (BCMCS) method defined in the C.S0054-A protocol also does not allow a user terminal to send a forward channel resource adjustment request independently. It is apparent that this method will waste forward channel resources seriously.

Using broadcast channels in cellular communication systems except the CDMA EVDO system has the similar problem in information broadcast for an uncertain number of users (terminals) in a cell.

Summary of the Invention

A technical problem to be solved by the present invention is to implement a method for adjusting broadcast and multicast forward channel resources in network communication systems, such as the CDMA EVDO system, in order to overcome shortcomings of the prior art such that a base station provides an appropriate forward rate based on information fed back by a terminal in a broadcast and multicast group (hereinafter referred to as terminal) and reverse wireless resources consumed by such a feedback mechanism is controllable and will not generate an uncontrollable effect on system reverse capacity.

In order to solve the technical problem described above, the present invention provides a method for adjusting forward channel resources, applied in a broadcast and multicast communication system, comprising:

a terminal in a broadcast and multicast group sending a forward channel resource adjustment request to a base station when the base station is required to adjust forward channel resources; and

the base station adjusting the forward channel resources after receiving the forward channel resource adjustment request.

In addition, the terminal calculates a random number $P$ when the base station is required to adjust the forward channel resources; and the terminal sends the forward channel resource adjustment request to the base station only when $P$ is within a sendable request value interval.

In addition, the forward channel resource adjustment request is divided into a forward channel resource increasing request and a forward channel resource decreasing request; and a sending period for sending the forward channel resource adjustment request is divided into one or more sending time segments for sending the forward channel resource increasing request and one or more sending time segments for sending the forward channel resource decreasing request.

In addition, a resource adjustment parameter $R_k$ used by the forward channel resource adjustment request sent by each terminal in the broadcast and multicast group in the same sending time segment $k$ is the same; and the resource adjustment parameter $R_k$ is used to represent:

one of an identifier of increasing the forward channel resources and an identifier of decreasing the forward channel resources; or

an increment or decrement of forward channel resource adjustment; or

a target value of the forward channel resource adjustment.

In addition, after receiving the forward channel resource adjustment request in one of the sending time segments of one sending period, the base station notifying each terminal in the broadcast and multicast group that the forward channel resource adjustment request has been received in this sending time segment; and
after knowing that the base station has received the forward channel resource adjustment request, the terminal in the broadcast and multicast group stopping sending the forward channel resource adjustment request in this sending time segment;
wherein the sending time segments for sending the forward channel resource increasing request precede the sending time segments for sending the forward channel resource decreasing request.
In addition, one sending period contains $M$ sending time segments for sending the forward channel resource increasing request, $L_0, ..., L_{M-1}$, and corresponding sendable request value intervals are denoted as $Q_0, ..., Q_{M-1}$, respectively, where $M$ is greater than or equal to 2, the interval length of $Q_0$ is minimum and the interval length of $Q_{M-1}$ is maximum;
if the terminal in the broadcast and multicast group detects, in the current sending period, that there is a terminal sending the forward channel resource increasing request in the sending time segment with the interval length being equal to $Q_0$, then the interval length of each $Q_i$ is decreased; and
if the terminal in the broadcast and multicast group detects, in the current sending period, that there is a terminal sending the forward channel resource increasing request in the sending time segment with the interval length being equal to $Q_{M-1}$, then the interval length of each $Q_i$ is increased, where $0 \leq i \leq M-1$.
In addition, if any one of the terminals in the broadcast and multicast group can not send the forward channel resource increasing request in the current sending period and does not detect that other terminals in the broadcast and multicast group send the forward channel resource increasing request in this sending period, then increasing the interval length of each $Q_i$.
In addition, if none of the terminals sends the forward channel resource request in N successive sending periods, then the terminal in the broadcast and multicast group increasing the interval length of the sendable request value interval corresponding to the sending time segment for sending the forward channel resource decreasing request; and
if there is a terminal sending the forward channel resource request in the current sending period, then the terminal in the broadcast and multicast group decreasing the interval length of the sendable request value interval corresponding to the sending time segment for sending the forward channel resource decreasing request.
In addition, assuming that one sending period contains $M$ sending time segments for sending the forward channel resource increasing request, $L_0, ..., L_{M-1}$, and corresponding sendable request value intervals are denoted as $Q_0, ..., Q_{M-1}$, respectively; in the M sendable request value intervals, the minimum interval length is $P_{min}$ and the maximum interval length is $P_{max}$;
$P_L$ and $P_U$ are selected such that $P_{min} < P_L \leq P_U < P_{max}$ is satisfied;
a sending time segment with the interval length of the sendable request value interval being greater than or equal to $P_L$ and less than or equal to $P_U$ among the $M$ sending time segments is set as a target sending time segment; wherein:
if there is a terminal sending the forward channel resource increasing request in a sending time segment with the interval length being less than $P_L$, then the interval length of each $Q_i$ is decreased; and
if there is a terminal sending the forward channel resource increasing request in a sending time segment with the interval length being greater than $P_U$, then the interval length of each $Q_i$ is increased, where $0 \leq i \leq M-1$.
In addition, assuming that one sending period contains $M$ sending time segments for sending the forward channel resource increasing request, $L_0, ..., L_{M-1}$, and corresponding sendable request value intervals are denoted as $Q_0, ..., Q_{M-1}$, respectively; in the $M$ sendable request value intervals, the minimum interval length is $P_{min}$ and the maximum interval length is $P_{max}$;
$P_L$ and $P_U$ are selected such that $P_{min} < P_L \leq P_U = P_{max}$ is satisfied;
a sending time segment with the interval length of the sendable request value interval being greater than or equal to $P_L$ and less than or equal to $P_U$ among the $M$ sending time segments is set as a target sending time segment;
if there is a terminal sending the forward channel resource increasing request in a sending time segment with the interval length being smaller than $P_L$, then the interval length of each $Q_i$ is decreased; and
if any one of the terminals in the broadcast and multicast group can not send the forward channel resource increasing request in the current sending period and does not detect that other terminals in the broadcast and multicast group send the forward channel resource increasing request in this current sending period, then the interval length of each $Q_i$ is increased, where $0 \leq i \leq M-1$.
In addition, the interval lengths of $Q_0, ..., Q_{M-1}$ are denoted as $P_0, ..., P_{M-1}$, respectively, and $P_j$ satisfies the

following relationship:

$$P_{j+1}/P_j = P_j/P_{j-1} = K; K > 0, \quad j = 1, \ldots, M\text{-}2.$$

moreover, increasing the interval length of each $Q_i$ means that the interval length of each $Q_i$ is multiplied by $x1$; and decreasing the interval length of each $Q_i$ means that the interval length of each $Q_i$ is divided by $x2$, where $x1>0$ and $x2>0$.

Using a method for adjusting broadcast and multicast forward channel resources in accordance with the present invention, the number of terminals which send a forward rate adjustment request (forward channel resource adjustment request) simultaneously can be controlled efficiently, thereby avoiding serious reverse interference. In addition, the present invention, through adaptive adjustment of a sending threshold $W_i$ (in other words, sendable request value interval) by the terminals, allows the number of the terminals, which send the forward rate adjustment request (forward channel resource adjustment request) simultaneously, in a group with more users to be controlled within a safe range, and enables users in a group with less users to send the forward rate adjustment request (forward channel resource adjustment request) timely, solving effectively the problem of allocating appropriate forward channel resources and providing an appropriate forward broadcast rate for a group containing an uncertain number of users.

In addition, in the present invention, by the sending of the forward channel resource adjustment request with the same resource adjustment parameter in the same time segment, the problem that the base station is unable to demodulate correctly the forward channel resource adjustment request of each terminal, which is caused by reverse interference generated when multiple terminals send respective forward channel resource adjustment request, is avoided.

Brief Description of the Drawings

FIG. 1 is a flow chart of a method for adjusting a forward broadcast rate between a terminal and a base station in accordance with an embodiment of the present invention; and

FIG. 2 is a flow chart of a method for adjusting a forward broadcast rate between a terminal and a base station and for the terminal to adjust $W_i$ independently in accordance with an embodiment of the present invention.

Preferred Embodiments of the Invention

In order to implement the present invention, two channels are required to be redefined according to the CDMA EVDO air interface protocol:

(1) Forward rate control channel (referred to as BDRC channel): terminals in a group use the channel to send a forward rate adjustment request (including a forward rate downward adjustment request and a forward rate upward adjustment request) to a base station; and this channel uses a group identifier (GID) and cell pilot offset (PN) as reverse long code mask.

(2) Application acknowledgement channel (referred to as BACK channel): a base station uses the channel to acknowledge the forward rate adjustment request from the terminal; and this channel uses Mac channel indices (MacIndex) to distinguish different groups in the same cell.

Unlike the common data rate channel (DRC) defined in the EVDO protocol, the BDRC channel is required to ensure that interfere won't occur in the case of multiple terminals in the same group in the same cell sending the forward rate adjustment request simultaneously such that the base station can demodulate contents sent by the terminals.

In order to meet the above requirements, the BDRC channel is defined as follows:

1) Each sending period for sending the forward rate adjustment request via the BDRC channel is divided into a plurality of sending time segments (which may also be called sending sub-periods) with the length of *Duration.*

Assuming that the length of the sending period is *Period* and the length of the sending time segment (i.e., the maximum duration in which the terminal sends the forward rate adjustment request) is *Duration,* then *Period* mod *Duration* = 0, that is, *Period* is an integral multiple of *Duration*, and both *Period* and *Duration* are CDMA system time lengths, which take a time slot as a unit.

2) If a user in the group needs to send the forward rate adjustment request in a certain sending period, he may select one offset in $i = 0, 1, ..., N$-1 and send the request in a sending time segment corresponding to the offset, where $N = Period / Duration$.

3) A base station defines a pair of parameters ($W_i$, $R_i$) ($i = 0,1, ..., N$ -1) for each offset (i.e., each sending time segment in one sending period), where $W_i$ represents a probability threshold required to be exceeded when the terminal sends the forward rate adjustment request (sending threshold for short), and $R_i$ represents an adjustment type of the forward rate adjustment request, e.g., rate increasing or decreasing, or a step of the rate increasing or decreasing, or a target rate of the request, specific meanings of which will be determined by the base station.

For each offset $i$, $R_i$ sent by each terminal in the group is completely identical to ensure that the base station can demodulate correctly (i.e., the base station can determine uniquely $R_i$ based on $i$) in the case where a plurality of terminals send the forward rate adjustment request to the base station simultaneously.

The above parameters are set by the base station and are notified to the terminals, where $W_i$ may be adjusted by the terminals independently and dynamically such that the number of terminals in the group which send the forward rate adjustment request simultaneously is controlled within a certain range. The specific adjustment method will be described hereinafter.

4) The terminal needs to calculate a random number $P$ before sending the forward rate adjustment request in offset $i$. The terminal can send the forward rate adjustment request in offset $i$ only when $P$ is less than or equal to $W_i$; otherwise, the terminal is required to wait for the next offset or the next sending period.

$P$, which may be limited between 0 and 1, may be calculated using a random number algorithm.

5) After the base station receives the forward rate adjustment request sent by the terminal in offset $i$, it uses the BACK channel to acknowledge the request from the terminal, i.e., it notifies all terminals in the group that the base station has received the request in offset $i$ of the current period. After all terminals in the group have received an acknowledgement indication in the BACK channel, they cannot send the forward rate adjustment request of the same type as that at the time of offset $i$ and the request being sent is stopped immediately.

For example, the type of the forward rate adjustment request is increasing or decreasing; while the forward rate adjustment request corresponding to offset $i$ is decreasing. If a certain terminal sends a forward rate adjustment request in offset $i$, then all the terminals can not resend the forward rate adjustment request of the decreasing type in this sending period.

It should be noted that there is a time delay no more than one time slot from sending a request by the terminal to acknowledging the request by the base station. After the terminal has detected an acknowledgement indication in the BACK channel in the first time slot of offset $i$-1, it knows that there is a terminal sending a request in offset $i$.

Of course, the base station may also use different acknowledgment indications to acknowledge separately requests received in different offset.

In the EVDO protocol, forward and reverse channel resources used for unicast include a forward traffic channel, forward pilot channel, reverse activity (RA) channel, rate control lock (DRCLock) channel, reverse power control (PRC) channel, automatic repeat request (ARQ) channel, reverse pilot channel, reverse rate indicator (RRI) cannel, data rate control (DRC) channel, data source control (DSC) channel, acknowledgement (ACK) channel and reverse data channel. Some of the channels may be selected to complete functions of the BDRC channel and BACK channel.

For example, the reverse pilot channel and DRC channel are selected as the BDRC channel and the DRCLock channel is used as the BACK channel. After a base station resolves the value of the DRC channel based on the reverse pilot channel, it sets the DRCLock channel to be 1 to indicate acknowledgement for a forward rate adjustment request.

In addition, if the reverse pilot channel and DRC channel are not used simultaneously as the BDRC channel, only the reverse pilot channel can be used as the BDRC channel. After the reverse pilot channel is locked (indicating that there is a terminal sending a forward rate adjustment request), the base station uses the BACK channel to acknowledge the forward rate adjustment request sent by the terminal, or uses combinations of the reverse pilot channel with other reverse Mac channels or data channels as the BDRC channel.

In addition, the base station may use the RPC channel, ARQ channel or other forward Mac channels or combinations thereof as the BACK channel to acknowledge the request from the terminal.

The present invention will be described in detail in conjunction with the accompanying drawings and embodiments.

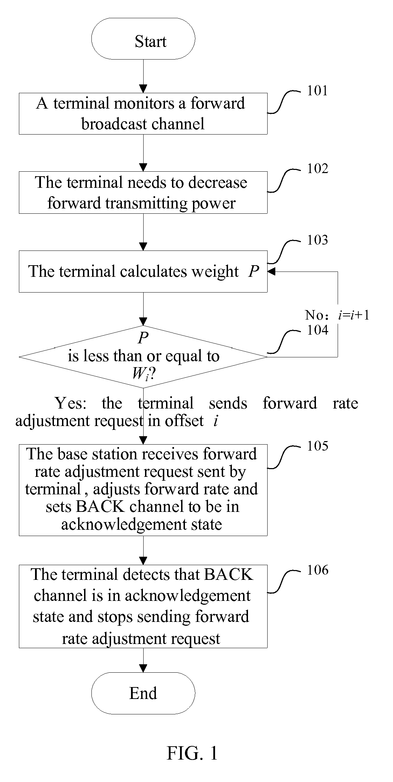

FIG. 1 is a flow chart of a method for adjusting a forward broadcast rate between a terminal and a base station in accordance with an embodiment of the present invention. In this embodiment, the present invention is described by taking a forward rate variable broadcast channel applied to the CDMA2000 EVDO RevA (version A) as an example.

The method comprises the following step:

Step 101: the base station establishes a forward broadcast channel and broadcasts resource information of the forward broadcast channel, such as a corresponding Macindex, to the terminal through a forward control channel message; the terminal monitors a forward traffic channel identified by the forward Macindex after receiving the control channel message.

Step 102: the terminal detects high forward packet error rate (PER) and low carrier to interference (C/I) ratio of the forward service channel and needs to decrease a forward rate.

Step 103: the terminal calculates a random number $P$.

Step 104: the terminal determines an offset i for sending a forward rate adjustment request and compares $P$ with $W_i$. If $P$ is less than or equal to $W_i$, then the terminal begins to send the forward rate adjustment request over the BDRC channel; otherwise, it recalculates $P$ in the next offset (offset $i+1$) (of course, it can continue to use the current $P$). When $P$ is less than or equal to $W_{i+1}$, the terminal begins to send the forward rate adjustment request (the maximum duration length for sending is $Duration$).

Step 105: after the base station receives the forward rate adjustment request sent by the terminal, it adjusts the forward rate and uses the BACK channel to acknowledge the reception of the forward rate adjustment request of the terminal and instructs the terminal not to resend the forward rate adjustment request in the current sending period, and the terminal which is sending the forward rate adjustment request also stops the sending.

Step 106: the terminal detects that the BACK channel is in an acknowledgement state, acknowledges the reception of its forward rate adjustment request, and thus stops sending the forward rate adjustment request.

It can be seen from the above that because in the present invention, the sending threshold $W_i$ of the forward rate adjustment request is set and the terminal is allowed to send the forward rate adjustment request to the base station only when its randomly generated $P$ is less than or equal to $W_i$, there is a certain probability that the terminal may be allowed to send the request to the base station, avoiding the problem of huge waste of communication resources, caused by excessive terminals sending the request simultaneously to the base station, even causing breakdown of the base station.

Because of uncertainty of the number of users (terminals) contained in the group and uncertainty of forward signal intensity of each terminal, in order to adapt to broadcast and multicast network environments with the above uncertain factors, each terminal is required to adjust $W_i$ dynamically to achieve the following purposes:

➢ When there are more terminals required to adjust the forward rate, the number of the terminals sending the forward rate adjustment request actually is controlled.

➢ When there are fewer terminals required to adjust the forward rate, the base station is able to satisfy the forward rate adjustment request of the terminal timely (i.e., ensure that the forward rate adjustment request of the terminal is able to be sent timely).

In order to achieve the adjustment purpose described above, when the base station sets parameters ($W_i$, $R_i$) corresponding to each sending time segment (offset) and the terminal adjusts $W_i$ independently, the following sending threshold adjustment strategies are mainly used:

(1) In the BDRC channel one or more sending time segments (offsets) is allocated for sending a forward rate downward adjustment request. If more than one sending time segments (offsets) is allocated for sending the forward rate downward adjustment request, then each sending time segment (offset) has a different initial value of $W_i$, that is to say, each sending time segment (offset) has a different sending probability value, which is arranged in an order of sending probabilities from small to big (i.e., sending thresholds from small to big).

(2) If in a sending time segment with small $W_i$ (i.e., small sending probability), there is a terminal sending a forward rate downward adjustment request successfully (indicating that currently there are possibly more terminals required to adjust downward the forward rate), then the terminal and other terminals may decrease $W_i$ corresponding to the sending time segment (offset) for sending the forward rate downward adjustment request, i.e., decrease success rate of sending the forward rate downward adjustment request in a subsequent sending period, to prevent excessive terminals from sending the forward rate adjustment request simultaneously.

(3) If in a sending time segment with big $W_i$ (i.e., big sending probability), there is a terminal sending a forward rate downward adjustment request successfully (indicating that currently there are fewer terminals required to adjust downward the forward rate), then other terminals may increase $W_i$ corresponding to the sending time segment (offset) for sending the forward rate downward adjustment request, i.e., increase success rate of sending the forward rate downward adjustment request in a subsequent sending period, to prevent the terminals required to adjust downward the forward rate from being unable to send the request successfully for a long time.

(4) If a certain terminal cannot send a forward rate downward adjustment request successfully and there is no other terminal sending the forward rate downward adjustment request in all sending time segments (offsets) in the entire sending period (indicating that currently there are fewer terminals required to adjust downward the forward rate), then the terminal may increase $W_i$ corresponding to the sending time segment (offset) for sending the forward rate downward adjustment request, i.e., increase success rate of sending the forward rate downward adjustment request in a subsequent sending period, to prevent the terminals required to adjust downward the forward rate from being unable to send the request successfully for a long time.

(5) If there is no terminal sending a forward rate downward and upward adjustment request in $N$ successive sending periods ($N$ is greater than 1), then any terminal (or it only limited to a terminal which desires to send the forward rate upward adjustment request, or to a terminal which once applied for a downward adjustment rate in previous several periods but now needs to apply for an upward adjustment rate due to improvement of wireless environments) increases $W_i$ corresponding to the sending time segment (offset) for sending the forward rate upward adjustment request.

(6) If there is a terminal sending a forward rate downward or upward adjustment request successfully, any terminal can decrease $W_i$ corresponding to each sending time segment (offset) for sending the forward rate upward adjustment request.

(7) $W_i$ corresponding to sending time segments (offsets) for sending a forward rate downward or upward adjustment request are proportional in turn, i.e., $W_{i+1}/W_i = W_i/W_{i-1} = K$, $K>1$. Moreover, when each $W_i$ is adjusted, $W_i$ is multiplied or divided by $x$ (not adds or subtracts $x$) to keep the above proportional relationship.

Given $W_{i+1}/W_i=K$, if the forward rate adjustment request occurs in offset $j+1$, and there is no terminal sending the forward rate adjustment request in offset $j$, then the mathematical desired value of the number of terminals sending the forward rate adjustment request simultaneously in offset $j+1$ equals to $K$. The number of the terminals sending the forward rate adjustment request simultaneously in this offset can be controlled efficiently through this radio.

Furthermore, the sending threshold adjustment strategies 2, 3 and 4 may be replaced with the following strategy:

(8) Assuming that one sending period contains $M$ sending time segments (offsets) for sending the forward rate downward adjustment request, $L_0$, ..., $L_{M-1}$, and the corresponding minimum sending threshold is $W_{min}$ and the maximum sending threshold is $W_{max}$.

$W_L$ and $W_U$ are selected such that $W_{min} < W_L \leq W_U < W_{max}$ is satisfied.

A sending time segment with the sending threshold being greater than or equal to $W_L$ and less than or equal to $W_U$ among the $M$ sending time segments is set as a target sending time segment.

If there is a terminal sending a forward rate downward adjustment request successfully in a sending time segment with the sending threshold being less than $W_{min}$, then any terminal can decrease $W_i$ corresponding to the sending time segment (offset) for sending the forward rate upward adjustment request.

In the case of $W_U < W_{max}$, if there is a terminal sending a forward rate downward adjustment request successfully in a sending time segment with the sending threshold being greater than $W_{max}$, then any terminal can increase $W_i$ corresponding to the sending time segment (offset) for sending the forward rate upward adjustment request; in the case of $W_U = W_{max}$, the processing method is the same as the strategy (4).

If there is a terminal sending a forward rate downward adjustment request successfully in the target sending time segment, then $W_i$ corresponding to the sending time segment (offset) for sending the forward rate upward adjustment request is unchanged.

A method for a terminal to adjust a sending threshold $W_i$ dynamically will be described below using an application embodiment.

Assuming that the number of users in a group with allocated numbers is 100, all the terminals in the group are possibly distributed in the same cell, or there are few users in other cells. Configurations of *Period*, *Duration* and ($W_i$, $R_i$) need to take into account various extreme situations: in an area where more users are distributed, the case that excessive users send a rate control request simultaneously can be avoided; and in an area where fewer users are distributed, it is necessary to ensure the users to be able to implement rate adjustment. Meanwhile, when the number of the users in the cell changes, $W_i$ can be adjusted adaptively to a value which adapts to user distribution.

The *Period* is set to be 32 time slots and the *Duration* is set to be 8 time slots, and there are 4 sending time segments (offsets) in a single sending period, where the first 3 sending time segments (offsets) are used for sending a forward rate downward adjustment request, while the last 1 sending time segment is used for sending the forward rate upward adjustment request. $W_i$ corresponding to the 3 sending time segments (offsets) for sending the forward rate downward adjustment request increase gradually and are in multiple relation with one another. The parameters ($W_i$, $R_i$) corresponding to each sending time segment are defined as follows:

Table 1

| Offset i | Initial value of $W_i$ (%) | Definition of $R_i$ |
|----------|---------------------------|---------------------|
| 0 | 0.04 | Downward adjustment |
| 1 | 0.16 | Downward adjustment |
| 2 | 0.64 | Downward adjustment |
| 3 | 0.04 | Upward adjustment |

Each terminal's adjustment target for $W_i$ is that a forward rate downward adjustment request is sent in offset 1 of the subsequent sending period, i.e. the number of terminals sending the forward rate downward adjustment request simultaneously is neither more nor less.

If a terminal detects that there is no terminal sending a forward rate downward adjustment request in the entire sending period or that a certain terminal can not send the forward rate downward adjustment request successfully in offset 2 when it is required to adjust downward the forward rate, then sending thresholds $W_i$ corresponding to all the offsets (offset 0, 1 and 2) for adjusting downward the forward rate are multiplied by 4 and adjusted to be 0.16, 0.64 and 2.56, respectively. If it is detected, via the BACK channel, that there is a terminal sending a forward rate downward adjustment request in offset 0, then sending thresholds $W_i$ corresponding to all the offsets (offset 0, 1 and 2) for adjusting downward the forward rate is multiplied by 4 and adjusted to be 0.01%, 0.04% and 0.16%, respectively.

Using the adjustment method described above, for an area where there are fewer users, when the forward rate is required to be adjusted downward, because $W_0$ and $W_1$ are smaller, it is possible that there is no terminal generating a random number exceeding the corresponding sending threshold in offset 0 and 1, but in offset 2, even if only one terminal is ready for sending the forward rate downward adjustment request, there is a probability of 64% that the forward rate downward adjustment request can be sent successfully, even thought it is not sent successfully in the current sending period. Because $W_2$ of the next sending period is greater than 1, the request can certainly be sent successfully. For an area where there are more users, if there is a user sending a forward rate downward adjustment request in offset 0, then there will be no user sending the forward rate downward adjustment request in offset 1 and 2, and the sending threshold $W_i$ corresponding to each offset (offset 0, 1 and 2) for adjusting downward the forward rate is divided by 4 in the next sending period such that the forward rate downward adjustment request can be sent in offset 1 as far as possible (that is, the number of users sending the forward rate downward adjustment request is maintained within an appropriate range).

Offset 3 is used for sending a forward rate upward adjustment request from a terminal to a base station. If an acknowledgement state is not set in the BACK channel of the base station in offset 0, 1 and 2, it is indicated that there is no user in the group sending the forward rate downward adjustment request. Thus, if the wireless communication environment of the last terminal or a set of terminals sending the forward rate downward adjustment request successfully is improved, the rate may be requested to be increased in offset 3; or if there is always no terminal sending a forward rate upward or downward adjustment request in a specified number of sending periods, any terminal with better wireless communication environment can calculate a random number $P$. if $P$ is less than or equal to $W_3$, then a rate increasing request can be sent.

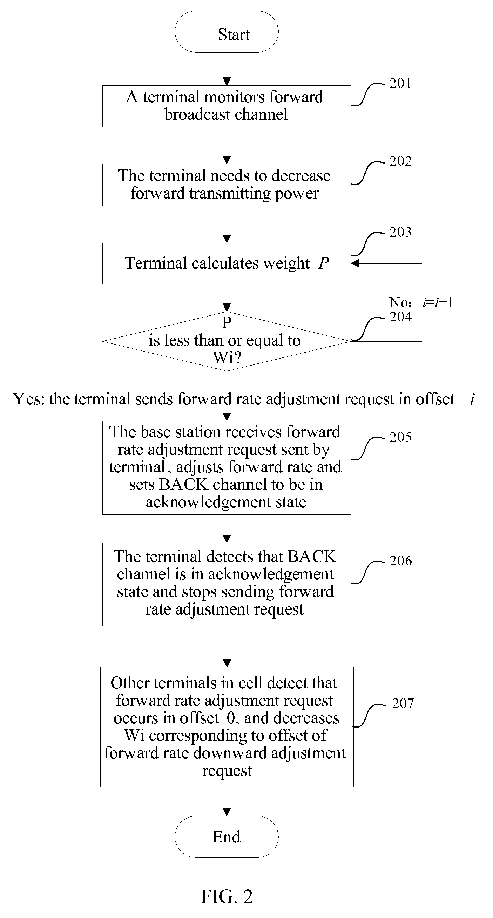

FIG. 2 is a flow chart of a method for adjusting a forward broadcast rate between a terminal and a base station and for the terminal to adjust $W_i$ independently in accordance with an embodiment of the present invention comprising the following steps:

Step 201: the base station establishes a forward broadcast channel and broadcasts resource information of the forward broadcast channel, such as a corresponding Macindex, to the terminal through a forward control channel message; the terminal monitors a forward service channel identified by the forward Macindex after receiving the control channel message.

Step 202: the terminal detects high forward packet error rate (PER) and low carrier to interference (C/I) ratio of the forward service channel and needs to decrease forward transmitting power.

Step 203: the terminal calculates a random number $P$.

Step 204: the terminal compares $P$ with $W_0$, and begins to send a forward rate adjustment request if $P$ is less than or equal to $W_0$; otherwise, the terminal recalculates $P$ in the next offset (offset 1) (of course, it can continue using the current $P$) and compares $P$ with $W_i$ corresponding to the next offset, and begins to send the forward rate adjustment request when $P$ is less than or equal to $W_i$.

Step 205: after the base station receives the forward rate adjustment request sent by the terminal, it adjusts the forward rate and uses the BACK channel to acknowledge the reception of the forward rate adjustment request of the terminal, and instructs the terminal that it is not required to resend the forward rate adjustment request in the current sending period, and the terminal which is sending the forward rate adjustment request also stops the sending.

Step 206: the terminal detects that the BACK channel is in an acknowledgement state, acknowledges the reception of its forward rate adjustment request, and thus stops sending the forward rate adjustment request.

Step 207: if other terminals in the group in the cell detect that a forward rate downward adjustment request occurs in offset 0, then $W_i$ corresponding to an offset (sending time segment) for sending the forward rate downward adjustment request is decreased.

According to the basic principle of the present invention, many variations may be made on the embodiments described above. Their examples will be described below.

(1) In the embodiment described above, one sending period is divided into multiple sending time segments with the length of *Duration.* In fact, one sending time segment may be set in one sending period, and a resource adjustment parameter *R* corresponding to this sending time segment represents a target value of rate adjustment, or an increment value of rate increasing and a decrement value of rate decreasing. For example:

$R$ = -2 means that the forward rate is adjusted downward by two units;

$R$ = 2 means that the forward rate is adjusted upward by two units;

$R$ = -11 means that the forward rate is adjusted to be -11; and

$R$ = 11 means that the forward rate is adjusted to be 11.

Of course, two sending time segments may also be set in one sending period, one for adjusting upward the forward rate, and the other for adjusting downward the forward rate. Likewise, $R$ may represent the target value of rate adjustment or the increment value and decrement value of rate adjustment.

(2) In the embodiment in accordance with the present invention described above, the method of the present invention is described by taking the adjustment of the forward rate as an example and is also applicable to adjustment of power of a forward channel. In fact, whether the rate adjustment or the power adjustment, they are adjustments of channel resources for a base station.

That is to say, either a request for adjusting downward the forward rate or a request for adjusting downward the power sent by a terminal is equivalent to sending a request for increasing the channel resources; and either a request for adjusting upward the forward rate or a request for adjusting upward the power sent by a terminal is equivalent to sending a request for decreasing the channel resources.

(3) In the embodiment described above, only when the calculated random number $P$ is less than or equal to the sending threshold, the terminal can be allowed to send the forward rate adjustment request. In other embodiments in accordance with the present invention, the sending threshold $W_i$ can be set. When $P$ is greater than or equal to the threshold, the terminal is allowed to send the forward rate adjustment request. For example, $W_i$ in table 1 are set to be 0.96, 0.84, 0.36 and 0.96, respectively.

The two cases described above can be expressed in a unified way as follows: when $P$ is within a preset sendable request value interval, the terminal is allowed to send the forward rate adjustment request.

For example, in the embodiment described above, if $P$ is a random number greater than or equal to 0 and less than or equal to 1, setting $W_0$ to be 0.04 is equivalent to setting the sendable request value interval to be greater than or equal to 0 and less than or equal to 0.04, i.e., [0, 0.04], increasing $W_0$ is equivalent to expanding the sendable request value interval in a value range of $P$; and decreasing $W_0$ is equivalent to reducing the sendable request value interval.

In addition, as a special case, the sendable request value interval may be comprised of a plurality of discontinuous value intervals in the value range of $P$.

Industrial Applicability

Using a method for adjusting broadcast and multicast channel rate in accordance with the present invention, the traditional method for setting fixedly a broadcast and multicast channel forward rate can be changed, a forward broadcast rate can be adjusted by users (terminals) in a cell based on wireless signal intensity, and the number of terminals which send a forward rate adjustment request simultaneously can be controlled efficiently, thereby avoiding serious reverse interference. In addition, the present invention, through adaptive adjustment of a sending threshold $W_i$ by the terminals, allows the number of the terminals, which send the forward rate adjustment request simultaneously, in a group with more users to be controlled within a safe range, and enables users in a group with less users to send the forward rate adjustment request timely, solving effectively the problem of allocating appropriate forward channel resources and providing an appropriate forward broadcast rate for a group containing an uncertain number of users.

**Claims**

1. A method for adjusting forward channel resources, applied in a broadcast and multicast communication system, comprising:

   a terminal in a broadcast and multicast group sending a forward channel resource adjustment request to a base station when the base station is required to adjust forward channel resources; and
   the base station adjusting the forward channel resources after receiving the forward channel resource adjustment request.

2. The method according to claim 1, wherein:

   the terminal calculates a random number $P$ when the base station is required to adjust the forward channel resources; and
   the terminal sends the forward channel resource adjustment request to the base station only when $P$ is within a sendable request value interval.

3. The method according to claim 1 or 2, wherein:

   the forward channel resource adjustment request is divided into a forward channel resource increasing request and a forward channel resource decreasing request; and
   a sending period for sending the forward channel resource adjustment request is divided into one or more sending time segments for sending the forward channel resource increasing request and one or more sending time segments for sending the forward channel resource decreasing request.

4. The method according to claim 3, wherein:

   a resource adjustment parameter $R_k$ used by the forward channel resource adjustment request sent by each terminal in the broadcast and multicast group in the same sending time segment $k$ is the same; and
   the resource adjustment parameter $R_k$ is used to represent:

   one of an identifier of increasing the forward channel resources and an identifier of decreasing the forward channel resources; or

an increment or decrement of forward channel resource adjustment; or
a target value of the forward channel resource adjustment.

**5.** The method according to claim 4, further comprising:

after receiving the forward channel resource adjustment request in one of the sending time segments of one sending period, the base station notifying each terminal in the broadcast and multicast group that the forward channel resource adjustment request has been received in this sending time segment; and
after knowing that the base station has received the forward channel resource adjustment request, the terminal in the broadcast and multicast group stopping sending the forward channel resource adjustment request in this sending time segment;
wherein the sending time segments for sending the forward channel resource increasing request precede the sending time segments for sending the forward channel resource decreasing request.

**6.** The method according to claim 5, wherein:

one sending period contains $M$ sending time segments for sending the forward channel resource increasing request, $L_0$, ..., $L_{M-1}$, and corresponding sendable request value intervals are denoted as $Q_0$, ..., $Q_{M-1}$, respectively, where $M$ is greater than or equal to 2, the interval length of $Q_0$ is minimum and the interval length of $Q_{M-1}$ is maximum;
if the terminal in the broadcast and multicast group detects, in the current sending period, that there is a terminal sending the forward channel resource increasing request in the sending time segment with the interval length being equal to $Q_0$, then the interval length of each $Q_i$ is decreased; and
if the terminal in the broadcast and multicast group detects, in the current sending period, that there is a terminal sending the forward channel resource increasing request in the sending time segment with the interval length being equal to $Q_{M-1}$, then the interval length of each $Q_i$ is increased, where $0 \leq i \leq M-1$.

**7.** The method according to claim 6, further comprising:

if any one of the terminals in the broadcast and multicast group can not send the forward channel resource increasing request in the current sending period and does not detect that other terminals in the broadcast and multicast group send the forward channel resource increasing request in this sending period, then increasing the interval length of each $Q_i$.

**8.** The method according to claim 5, further comprising:

if none of the terminals sends the forward channel resource request in $N$ successive sending periods, then the terminal in the broadcast and multicast group increasing the interval length of the sendable request value interval corresponding to the sending time segment for sending the forward channel resource decreasing request; and
if there is a terminal sending the forward channel resource request in the current sending period, then the terminal in the broadcast and multicast group decreasing the interval length of the sendable request value interval corresponding to the sending time segment for sending the forward channel resource decreasing request.

**9.** The method according to claim 5, wherein:

assuming that one sending period contains $M$ sending time segments for sending the forward channel resource increasing request, $L_0$, ..., $L_{M-1}$, and corresponding sendable request value intervals are denoted as $Q_0$, ..., $Q_{M-1}$, respectively; in the $M$ sendable request value intervals, the minimum interval length is $P_{min}$ and the maximum interval length is $P_{max}$;
$P_L$ and $P_U$ are selected such that $P_{min} < P_L \leq P_U < P_{max}$ is satisfied;
a sending time segment with the interval length of the sendable request value interval being greater than or equal to $P_L$ and less than or equal to $P_U$ among the $M$ sending time segments is set as a target sending time segment; wherein:

if there is a terminal sending the forward channel resource increasing request in a sending time segment with the interval length being less than $P_L$, then the interval length of each $Q_i$ is decreased; and
if there is a terminal sending the forward channel resource increasing request in a sending time segment with the interval length being greater than $P_U$, then the interval length of each $Q_i$ is increased, where $0 \leq i \leq M-1$.

10. The method according to claim 5, wherein:

assuming that one sending period contains $M$ sending time segments for sending the forward channel resource increasing request, $L_0$, ..., $L_{M-1}$, and corresponding sendable request value intervals are denoted as $Q_0$, ..., $Q_{M-1}$, respectively; in the $M$ sendable request value intervals, the minimum interval length is $P_{min}$ and the maximum interval length is $P_{max}$;

$P_L$ and $P_U$ are selected such that $P_{min} < P_L \leq P = P_{max}$ is satisfied;

a sending time segment with the interval length of the sendable request value interval being greater than or equal to $P_L$ and less than or equal to $P_U$ among the $M$ sending time segments is set as a target sending time segment;

if there is a terminal sending the forward channel resource increasing request in a sending time segment with the interval length being smaller than $P_L$, then the interval length of each $Q_i$ is decreased; and

if any one of the terminals in the broadcast and multicast group can not send the forward channel resource increasing request in the current sending period and does not detect that other terminals in the broadcast and multicast group send the forward channel resource increasing request in this current sending period, then the interval length of each $Q_i$ is increased, where $0 \leq i \leq M-1$.

11. The method according to claim 6 or 7 or 9 or 19, wherein:

the interval lengths of $Q_0$, ..., $Q_{M-1}$ are denoted as $P_0$, ..., $P_{M-1}$, respectively, and $P_j$ satisfies the following relationship:

$$P_{j+1}/P_j = P_j/P_{j-1} = K; K > 0, \ \ j = 1, \ ..., M\text{-}2.$$

moreover, increasing the interval length of each $Q_i$ means that the interval length of each $Q_i$ is multiplied by $x1$; and decreasing the interval length of each $Q_i$ means that the interval length of each $Q_i$ is divided by $x2$, where $x1 > 0$ and $x2 > 0$.

Start

A terminal monitors a forward broadcast channel ⟋ 101

The terminal needs to decrease forward transmitting power ⟋ 102

The terminal calculates weight $P$ ⟋ 103

No: $i=i+1$

$P$ is less than or equal to $W_i$? ⟋ 104

Yes: the terminal sends forward rate adjustment request in offset $i$

The base station receives forward rate adjustment request sent by terminal, adjusts forward rate and sets BACK channel to be in acknowledgement state ⟋ 105

The terminal detects that BACK channel is in acknowledgement state and stops sending forward rate adjustment request ⟋ 106

End

FIG. 1

Start

A terminal monitors forward broadcast channel — 201

The terminal needs to decrease forward transmitting power — 202

Terminal calculates weight $P$ — 203

No: $i=i+1$

$P$ is less than or equal to Wi? — 204

Yes: the terminal sends forward rate adjustment request in offset $i$

The base station receives forward rate adjustment request sent by terminal, adjusts forward rate and sets BACK channel to be in acknowledgement state — 205

The terminal detects that BACK channel is in acknowledgement state and stops sending forward rate adjustment request — 206

Other terminals in cell detect that forward rate adjustment request occurs in offset 0, and decreases Wi corresponding to offset of forward rate downward adjustment request — 207

End

FIG. 2

# INTERNATIONAL SEARCH REPORT

| | International application No. |
|---|---|
| | PCT/CN2008/072702 |

**A. CLASSIFICATION OF SUBJECT MATTER**

See extra sheet
According to International Patent Classification (IPC) or to both national classification and IPC

**B. FIELDS SEARCHED**

Minimum documentation searched (classification system followed by classification symbols)

IPC: H04W52/-; H04B7/-; H04Q7/-; H04L29/-; H04L12/-

Documentation searched other than minimum documentation to the extent that such documents are included in the fields searched

Electronic data base consulted during the international search (name of data base and, where practicable, search terms used)

WPI, EPODOC, PAJ, IEEE, CNKI, CNPAT: FORWARD, DOWNLINK, RESOURCE?, RATE, POWER, ADJUST+, CONTROL+, BROADCAST, MULTICAST, REQUEST+, RANDOM, NUMBER, PROBABILITY

**C. DOCUMENTS CONSIDERED TO BE RELEVANT**

| Category* | Citation of document, with indication, where appropriate, of the relevant passages | Relevant to claim No. |
|---|---|---|
| X | CN 101023605 A (SAMSUNG ELECTRONICS CO., LTD.) 22 August 2007 (22.08.2007) page 2 paragraphs 2-4, page 4 paragraph 3 – page 13 paragraph 5 in the description | 1-5 |
| A | CN 1399858 A (ERICSSON TELEFON AB L M) 26 February 2003 (26.02.2003) the whole document | 1-11 |
| A | CN 1655473 A (BEIJING SAMSUNG TELECOM TECHNOLOGY CO., LTD.) 17 August 2005 (17.08.2005) the whole document | 1-11 |
| A | CN 1383637 A (SAMSUNG ELECTRONICS CO., LTD.) 04 December 2002 (04.12.2002) the whole document | 1-11 |

☐ Further documents are listed in the continuation of Box C.     ☒ See patent family annex.

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim (S) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&" document member of the same patent family |

| Date of the actual completion of the international search 05 February 2009 (05.02.2009) | Date of mailing of the international search report **05 Mar. 2009 (05.03.2009)** |
|---|---|
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **WANG, Jiaxin** Telephone No. (86-10)62413771 |

Form PCT/ISA/210 (second sheet) (April 2007)

## INTERNATIONAL SEARCH REPORT
### Information on patent family members

International application No.

*PCT/CN2008/072702*

| Patent Documents referred in the Report | Publication Date | Patent Family | Publication Date |
|---|---|---|---|
| CN 101023605 A | 22.08.2007 | WO 2006022529 A1 | 02.03.2006 |
| | | US 2006067268 A1 | 30.03.2006 |
| | | KR 20060019457 A | 03.03.2006 |
| | | INKOLNP 200700545 E | 06.07.2007 |
| CN 1399858 A | 26.02.2003 | WO 0139540 A1 | 31.05.2001 |
| | | SE 9904299 A | 27.05.2001 |
| | | AU 1906901 A | 04.06.2001 |
| | | EP 1232665 A1 | 21.08.2002 |
| | | TW 494697 A | 11.07.2002 |
| | | JP 2003516001 T | 07.05.2003 |
| | | US 6934268 B1 | 23.08.2005 |
| | | CN 1196374 C | 06.04.2005 |
| | | DE 60036219 E | 11.10.2007 |
| | | ES 2292492 T3 | 16.03.2008 |
| | | AR 029020 A | 04.06.2003 |
| | | AT 372034 T | 15.09.2007 |
| CN 1655473 A | 17.08.2005 | NONE | |
| CN 1383637 A | 04.12.2002 | WO 0201763 A1 | 03.01.2002 |
| | | AU 6641501 A | 08.01.2002 |
| | | BRPI 0106881 A | 07.05.2002 |
| | | EP 1206854 A1 | 22.05.2002 |
| | | KR 20020001659 A | 09.01.2002 |
| | | US 2002136286 A1 | 26.09.2002 |
| | | JP 2004502330 T | 22.01.2004 |
| | | RU 2234192 C2 | 10.08.2004 |
| | | CN 1170378 C | 06.10.2004 |
| | | INDELNP 200200139 E | 03.06.2005 |
| | | CA 2384466 A | 03.01.2002 |

Form PCT/ISA/210 (patent family annex) (April 2007)

# INTERNATIONAL SEARCH REPORT

| | |
|---|---|
| International application No. | |
| | PCT/CN2008/072702 |

Continuation of : second sheet A. CLASSIFICATION OF SUBJECT MATTER

H04W52/04(2009.01)i

H04B7/005(2006.01)i

Form PCT/ISA/210 (extra sheet) (April 2007)